# EUROPEAN PATENT APPLICATION

(11) **EP 2 716 443 A1**
(43) Date of publication of application: **09.04.2014**
(21) Application number: 13179097.4
(22) Date of filing: 02.08.2013
(51) Int. Cl.: B32B 18/00, C04B 35/80, C04B 35/565, B32B 5/12, B29C 70/08

(54) **A Ceramic Matrix Composite, Method of Making said Ccmposite, and a Pre-Preg Composite Ply**

(30) Priority: 04.10.2012 US 201213644847
(71) Applicant: General Electric Company, Schenectady, New York 12345 (US)
(72) Inventor: ROBERTS, Herbert Chidsey, Greenville, SC South Carolina 29615 (US); GARCIA-CRESPO, Andres, Greenville, SC South Carolina 29615 (US); TAXACHER, Glenn Curtis, Greenville, SC South Carolina 29615 (US)
(74) Representative: Cleary, Fidelma

(57) **Abstract**

A composite (100), method of making the composite (100) and a pre-preg composite ply are provided. The composite includes a first layer (102), a second layer (104) and a third layer (106). The first layer (102) includes at least one ply of unidirectional tape. The second layer (104) is adjacent the first layer (102) and includes at least one composite ply. The at least one composite ply includes a thin continuous matrix ply sheet having a plurality of randomly oriented unidirectional tape segments thereon. The third layer (106) is adjacent the second layer (104) and includes at least one ply of unidirectional tape. The ceramic matrix composite (100) provides about 15% to about 20% strength relative to a composite comprising all unidirectional plies and the ceramic matrix composite (100) has a bending length of 3 cm to 25 cm based on a Shirley stiffness test.

## Description

### FIELD OF THE INVENTION

The present invention relates generally to ceramics and more specifically to a ceramic matrix composite, a method of forming ceramic matrix composite, and a pre-preg composite ply.

### BACKGROUND OF THE INVENTION

In a laminate assembly of ceramic matrix composites, the melt infiltration process exposes the laminate to temperatures above 1000°F. The production process for making laminates for ceramic matrix composites limits the choice of materials that can be used in the inner laminate layers to non-organic material. Non-organic materials, such as ceramics, may be able to withstand high temperatures but are not as flexible as composite materials. Structural and thermal loading on the inner material may exceed the monolithic ceramic strain limits, especially if no reinforcement is available to redistribute stain loading. Monolithic ceramic fillers are prone to cracking due to excessive strains. Using unidirectional CMC tape, although it may resist cracking when placed under structural or thermal related strain increases cost.

Therefore, composite, a method making a composite, and a pre-preg composite ply that do not suffer from the above drawbacks is desirable in the art.

### SUMMARY OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

According to one aspect of the present invention, a composite is provided. The composite includes a first layer, a second layer, and a third layer. The first layer includes at least one ply of a unidirectional tape. The second layer is adjacent the first layer and the second layer includes at least one composite ply. The at least one composite ply of the second layer includes a thin continuous matrix ply sheet having a plurality of randomly oriented unidirectional tape segments thereon. The third layer is adjacent the second layer and the third layer includes at least one ply of the unidirectional tape. The composite provides about 15% to about 20% strength relative to a composite comprising all unidirectional plies and the composite has a bending length of 3 cm to 25 cm based on a Shirley stiffness test.

According to another aspect of the present invention, a method of forming composite is provided. A first layer having a unidirectional orientation is provided and the first layer includes at least one ply of a unidirectional tape. A second layer having random fiber orientation is applied to the first layer, the second layer includes at least one composite ply, the composite ply comprising a thin continuous matrix ply sheet having a plurality of randomly oriented unidirectional tape segments thereon. A third layer having unidirectional orientation is applied to the second layer and the third layer includes at least one ply of a unidirectional tape. The first layer, the second layer, and the third layer are cured to form a composite. The composite provides about 15% to about 20% strength relative to a composite comprising all unidirectional plies and the ceramic matrix composite has a bending length of 3 cm to 25 cm based on a Shirley stiffness test.

According to another aspect of the present invention, a pre-preg composite ply is provided. The pre-preg composite ply includes a thin continuous matrix ply sheet having a plurality of randomly oriented unidirectional tape segments thereon. The plurality of randomly oriented unidirectional tape segments occupy about 50% to about 99% of a surface area of the thin continuous matrix ply sheet.

Other features and advantages of the present invention will be apparent from the following more detailed description of the preferred embodiment, taken in conjunction with the accompanying drawings which illustrate, by way of example, the principles of the invention.

### BRIEF DESCRIPTION OF THE DRAWINGS

FIG. 1 is a perspective view of a composite of the present disclosure.
FIG. 2 is a side view of a composite of the present disclosure.
FIG. 3 is a top view of a unidirectional tape of the present disclosure.
FIG. 4 is a top view of a pre-preg composite ply of the present disclosure.
FIG. 5 is a flow chart of the method of forming a ceramic matrix composite of the present disclosure.

Wherever possible, the same reference numbers will be used throughout the drawings to represent the same parts.

### DETAILED DESCRIPTION OF THE INVENTION

Provided is an economically viable method of forming a composite, a method making a composite, and a pre-preg composite ply that do not suffer from the drawbacks in the prior art. The present disclosure is generally applicable to composites including ceramic matrix composites (CMCs), polymer matrix composites (PMCs) and metal matrix composite (MMCs). One advantage of an embodiment of the present disclosure is that the composite construction provides strain loading to CMCs, PMCs, and MMCs. Yet another advantage of the present disclosure is a composite that withstands cracking under thermal strain. Another advantage of an embodiment of the present disclosure is reduced ply lifting. Yet another advantage of an embodiment of the present disclosure includes reduced voids in CMCs, PMCs, MMCs and components made using the CMCs, PMCs and MMCs. Another advantage is easier processing to form CMCs, PMCs, MMCs and components resulting in higher part yields. Yet another advantage of an embodiment of the present disclosure is a lower cost in forming CMCs, PMCs, MMCs and components formed therefrom.

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

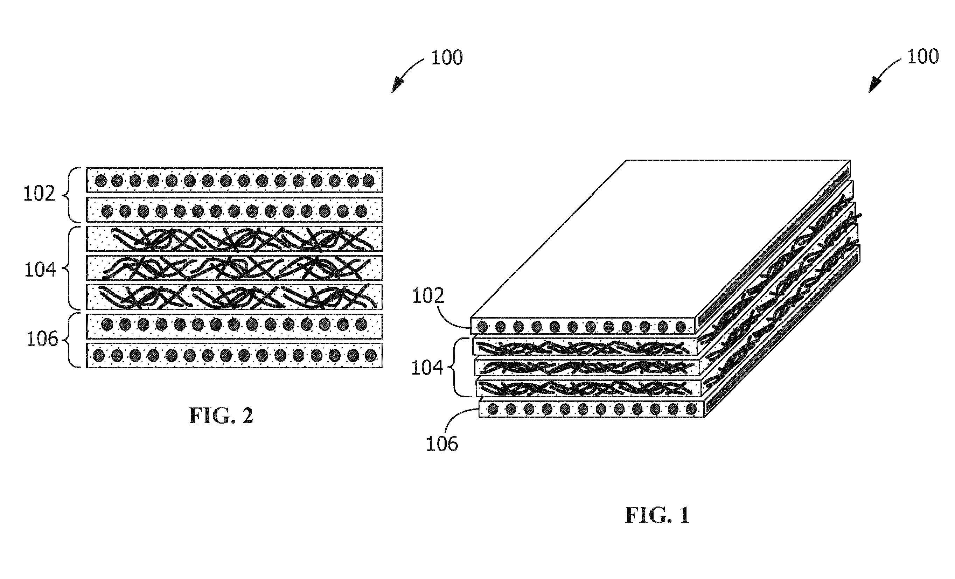

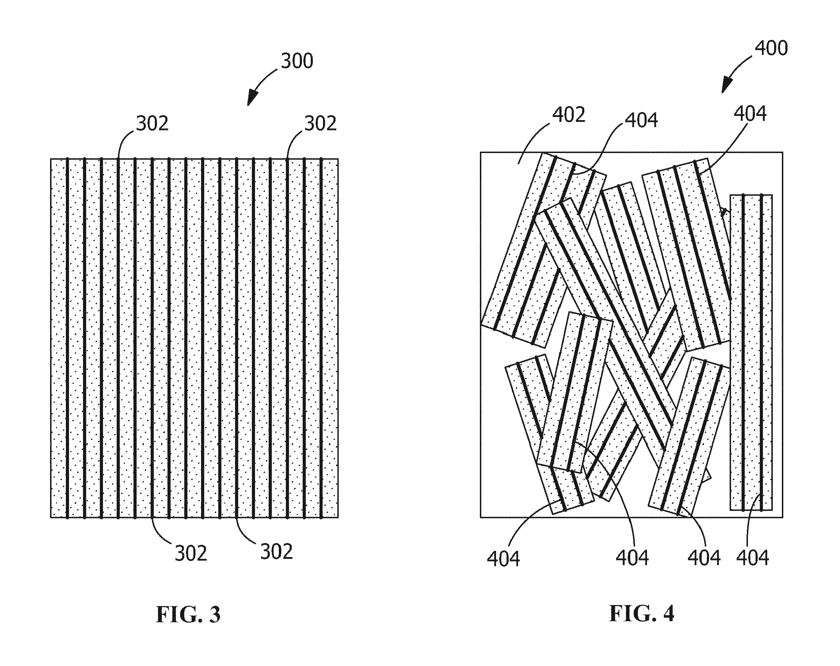

FIG. 1 is a perspective view of a composite 100. Composite 100 includes a first layer 102, a second layer 104, and a third layer 106. First layer 102 includes at least one ply of unidirectional tape 300 (see FIG. 3). Second layer 104 is placed adjacent to first layer 102. Second layer 104 includes at least one composite ply 400 (see FIG. 4). Composite ply 400 includes a thin continuous matrix ply sheet 402 having a plurality of randomly oriented unidirectional tape segments 404 (see FIG. 4). Third layer 106 is placed adjacent to second layer 104. Third layer 106 includes at least one ply of unidirectional tape 300. Composite 100 provides about 15% to about 20% strength relative to a composite comprising all unidirectional plies and composite 100 has a bending length of about 3 centimeters to about 25 centimeters, or alternatively about 5 centimeters to about 22 centimeters, or alternatively about 10 centimeters to about 20 centimeters, based on a Shirley stiffness test.

FIG. 2 is a side view of component 100 including first layer 102, second layer 104, and third layer 106. First layer 102 includes about 1 to 4 plies of unidirectional tape 300. Second layer 104 includes 1 to 20 composite plies 400. Third layer 106 includes about 1 to 4 plies of unidirectional tape 300. In one embodiment, third layer 106 is substantially similar to first layer 102.

FIG. 3 is top view schematic of ply of unidirectional tape 300. Unidirectional tape 300 includes a plurality of fibers 302 arranged to have substantially the same orientation. Orientation of unidirectional fibers 302 may be any suitable orientation, such as, but not limited to, 0°, 45°, or 90°. Suitable materials for fibers 302 of unidirectional tape 300, include, but are not limited to, silicon, carbon, silicon-carbide, rare-earth silicates, silicon nitride, alumina, silica, boron, boron carbide, poly-paraphenylene terephthalamide (KEVLAR® from DuPont), refractory materials, superalloys, S-glass, beryllium and combinations thereof.

In one embodiment, unidirectional tape 300, is a CMC, and plurality of fibers 302 are ceramic fibers selected from, but not limited to, carbon, silicon-carbide (SiC), silicon-dioxide (SiO2), aluminum-oxide (Al203), mullite, zirconium dioxide (ZrO2), silicon carbide incorporating Ti, Zr or Al, silicon oxy-carbinde (SiOxCy), silicon boro-carbonitride (SiBxCyNz), and combinations thereof. In an alternative embodiment, unidirectional tape 300 is a PMC, and the plurality of fibers 302 include fibers suitable for reinforcement of polymers, selected from, but not limited to, carbon, aramid, glass, boron, poly-paraphenylene terephthalamide (KEVLAR®), and combinations thereof. In another embodiment, unidirectional tape 300 is a MMC, and plurality of fibers 302 are fibers or particles suitable for reinforcement of metal matrix composites, selected from, but not limited to, carbon, silicon carbide, boron carbide, diamond, transition metal carbides, nitrides and silicides, metallic wires, and combinations thereof.

Unidirectional tape 300 is formed using known manufacturing methods and includes a pre-preg matrix that holds fibers 302 in place. Suitable examples of pre-preg matrix, include, but are not limited to, resins or polymers that are thermoplastic or thermosetting. For example, CMC based unidirectional tapes are constructed from oxide based fibers and a binding mixture of an oxide based matrices and an organic binder, the organic binder, includes, but is not limited to, epoxy, polyurethane, or polyvinyl acetate (PVA ). Another example includes, CMC based unidirectional tapes constructed from non-oxide or silicon carbide fibers and a binding mixture of non-oxide based matrices and an organic binder that are wound circumferentially around a drum wall or linearly aligned on a plane to form uniformly spaced fibers intermixed with a matrix slurry with forms a unidirectional tape.

As shown in FIG. 4, composite ply 400 includes a thin continuous matrix ply sheet 402 having a plurality of randomly oriented unidirectional tape segments 404 thereon. Composite ply 400 has a thickness of about 127 microns (5 mils) to about 381 microns (15 mils), or alternatively about 150 microns to about 350 microns, or alternatively about 175 microns to about 325 microns. Thin continuous matrix ply sheet 402 is constructed from a silicon carbide powder mixed with a binder, ceramic powder mixed with an organic binder, epoxy, polyurethane, and combinations thereof. In one embodiment, when continuous matrix ply sheet 402 is a CMC ply sheet silicon carbide power is mixed with a binder. In an alternative embodiment, when continuous matrix ply sheet 402 is a PMC, sheet 402 is an epoxy or polyurethane. In yet another embodiment, when continuous matrix ply sheet 402 is a MMC, sheet 402 is a powder metal mixed with an organic binder. Suitable examples of organic binders include, but are not limited to, epoxy, polyurethane, or polyvinyl acetate (PVA).

In building composite 100, the same chemistry is used, only CMC, only PMC, or only MMC, the underlying composite chemistries are not mixed to make composite 100. Composite ply 400 is constructed by assembling a set of randomly aligned mini-strips or unidirectional tape segments 404 on top of a thin matrix layer. Thickness of matrix layer is about 0.0762 millimeters (0.003 inches) to about 0.3048 millimeters (0.012 inches). The matrix layer is used to create a surface of continuity that unidirectional tape segments 404 are applied to, thereby building up composite ply 400. The disclosure provides up to provide 100 percent coverage of the base matrix layer with at least one and up to three overlaying/overlapping unidirectional tape segments 404, each additional unidirectional tape segment 404 filling in the exposed matrix regions and being shifted or reoriented if the stacking exceeds more than three layers of unidirectional tap segments 404. After placing unidirectional tape segments 404 in matrix, the resulting assembly is then placed under pressure to compact the assembly of unidirectional tape segments into a dense ply stack that will act as a uniform ply at the micro level for macro based laminate assembly and the final composite component construction, thereby forming composite ply 400.

Unidirectional tape segments 404 are formed from left over or cut-up unidirectional ceramic composite tapes. Randomly oriented unidirectional tape segments 404 occupy about 50% to about 99%, or alternatively about 60% to about 90%, or alternatively about 65% to about 85% of a surface area of the thin continuous matrix ply sheet 402. Randomly oriented unidirectional tape segments 404 have a length of about 25.4 millimeters (1 inch) to about 508.0 millimeters (20 inches), or alternatively about 50 millimeters to about 400 millimeters, or alternatively about 75 millimeters to about 300 millimeters. Randomly oriented unidirectional tape segments 404 have a width of about 25.4 millimeters (1 inch) to about 203.2 millimeters (8 inches), or alternatively about 30 millimeters to about 190 millimeters, or alternatively about 50 millimeters to about 150 millimeters.

Comparing composite ply 400 of the present disclosure to random orientation fiber tape sheets, composite ply 400 is easier to visually inspect and place when forming CMCs, PMCs, or MMCs. Additionally, composite ply 400 produces fewer voids because it has a bending length of 3 cm to 25 cm based on a Shirley stiffness test, which allows composite ply 400 to conform to complex surface of components compared to random orientation fiber sheets. As used herein, "bending stiffness" is a special property of fabric or fibers and the bending stiffness is the tendency of fabric to keep standing without any support. Bending stiffness is a key factor in the study of handle and drape of fabric and unidirectional ply laminates.

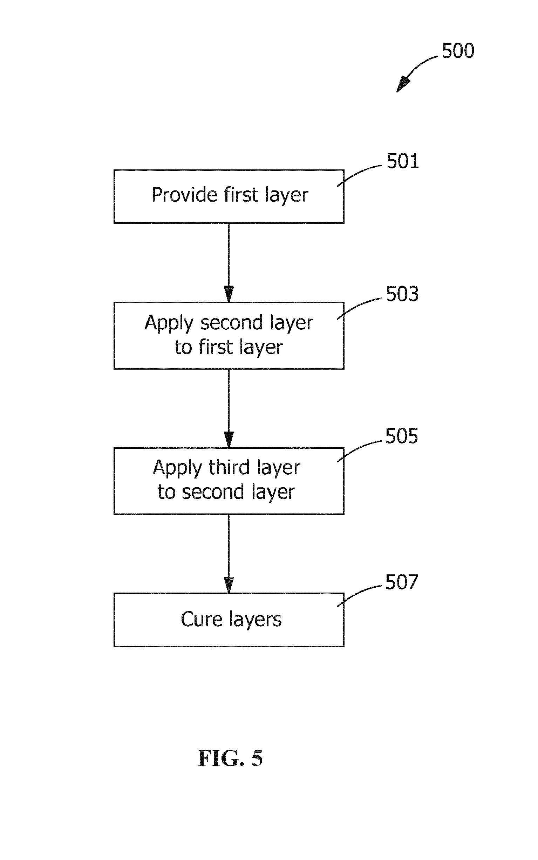

FIG. 5 is a flow chart describing method 500 of making ceramic matrix composite 100. Method 500 includes providing first layer 102 having a unidirectional orientation (see FIGS. 1 and 2), step 501. First layer 102 includes at least one ply of unidirectional tape 300 (see FIG. 3). Method 500 includes applying second layer 104 to first layer 102, (see FIGS. 1 and 2), step 503. Second layer 104 has a random fiber orientation and includes at least one composite ply 400. Composite ply 400 includes thin continuous matrix ply sheet 402 having plurality of randomly oriented unidirectional tape segments 404 thereon (see FIG. 4). Method 400 includes applying third layer 106 to second layer 104, (see FIGS. 1 and 2), step 505. Third layer 106 has unidirectional orientation and includes at least one ply of unidirectional tape 300 (see FIG. 3). Method includes curing first layer 102, second layer 104, and third layer 106 to form ceramic matrix composite 100, step 507. Ceramic matrix composite 100 provides about 15% to about 20% strength relative to a composite comprising all unidirectional plies and the ceramic matrix composite 100 has a bending length of 3 cm to 25 cm based on a Shirley stiffness test.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

Various aspects and embodiments of the present invention are defined by the following numbered clauses:
1. A method of making a ceramic matrix composite, the method comprising:
   providing a first layer having a unidirectional orientation, the first layer including at least one ply of a unidirectional tape;
   applying a second layer to the first layer, the second layer having a random fiber orientation, and the second layer including at least one composite ply, the at least one composite ply comprising a thin continuous matrix ply sheet having a plurality of randomly oriented unidirectional tape segments thereon;
   applying a third layer to the second layer, the third layer having a unidirectional orientation and the third layer including at least one ply of a unidirectional tape; and
   curing the first layer, the second layer, and the third layer to form a ceramic matrix composite, wherein the ceramic matrix composite provides about 15% to about 20% strength relative to a composite comprising all unidirectional plies and the ceramic matrix composite has a bending length of 3 cm to 25 cm based on a Shirley stiffness test.
2. The method of clause 1, wherein the first layer includes 1 to 4 plies of unidirectional tape.
3. The method of clause 1 or 2, wherein the second layer includes 1 to 20 composite plies.
4. The method of any preceding clause, wherein the at least one composite ply has a thickness of about 127 microns (5mils) to about 381 microns (15 mils).
5. The method of any preceding clause, wherein the thin continuous matrix ply sheet is selected from the group consisting of a silicon carbide powder.
6. The method of any preceding clause, wherein the randomly oriented unidirectional tape segments have a length of about 25.4 millimeters to about 508.0 millimeters.
7. The method of any preceding clause, wherein the randomly oriented unidirectional tape segments have a width of about 25.4 millimeters to about 203.2 millimeters.
8. The method of any preceding clause, wherein the plurality of randomly oriented unidirectional tape segments occupy about 50% to about 99% of a surface area of the thin continuous matrix ply sheet.
9. The method of any preceding clause, wherein the third layer includes 1 to 4 plies of pre-preg unidirectional tape.
10. A pre-preg composite ply comprising a thin continuous matrix ply sheet having a plurality of randomly oriented unidirectional tape segments thereon, wherein the plurality of randomly oriented unidirectional tape segments occupy about 50% to about 99% of a surface area of the thin continuous matrix ply sheet.

## Claims

1. A ceramic matrix composite (100) comprising:
a first layer (102) including at least one ply of a unidirectional tape (300);
a second layer (104) adjacent the first layer (102), the second layer (104) including at least one composite ply (400), the at least one composite ply (400) comprising a thin continuous matrix ply sheet (402) having a plurality of randomly oriented unidirectional tape segments (404) thereon; and
a third layer (106) adjacent the second layer (104), the third layer (106) including at least one ply of a unidirectional tape (300),
wherein the ceramic matrix composite (100) provides about 15% to about 20% strength relative to a composite (100) comprising all unidirectional plies and the ceramic matrix composite (100) has a bend ratio of bending length of 3 cm to 25 cm based on a Shirley stiffness test.

2. The ceramic matrix composite of claim 1, wherein the first layer (102) includes 1 to 4 plies of unidirectional tape (300).

3. The ceramic matrix composite of claim 1 or 2, wherein the second layer (104) includes 1 to 20 composite plies (400).

4. The ceramic matrix composite of any of claims 1 to 3, wherein the at least one composite ply (400) has a thickness of about 127 microns to about 381 microns.

5. The ceramic matrix composite of any of claims 1 to 4, wherein the thin continuous matrix ply sheet (402) is selected from the group consisting of a silicon carbide powder mixed with a binder, ceramic powder mixed with an organic binder, epoxy, polyurethane, and combinations thereof.

6. The ceramic matrix composite of any preceding claim, wherein the plurality of randomly oriented unidirectional tape segments (404) each have a length of about 25.4 millimeters to about 508.0 millimeters.

7. The ceramic matrix composite of any preceding claim, wherein the plurality of randomly oriented unidirectional tape segments (404) each have a width of about 25.4 millimeters to about 203.2 millimeters.

8. The ceramic matrix composite of any preceding claim, wherein the plurality of randomly oriented unidirectional tape segments (404) occupy about 50% to about 99% of a surface area of the thin continuous matrix ply sheet (402).

9. The ceramic matrix composite of any preceding claim, wherein the third layer (106) includes 1 to 4 plies of pre-preg unidirectional tape (300).

10. The ceramic matrix composite of any preceding claim, wherein the third layer (106) is substantially similar to the first layer (102).

11. A method of making a ceramic matrix composite (100), the method comprising:
providing a first layer (102) having a unidirectional orientation, the first layer including at least one ply of a unidirectional tape (300);
applying a second layer (104) to the first layer (102), the second layer (104) having a random fiber orientation, and the second layer including at least one composite ply (400), the at least one composite ply (400) comprising a thin continuous matrix ply sheet (402) having a plurality of randomly oriented unidirectional tape segments (404) thereon;
applying a third layer (106) to the second layer (104), the third layer (106) having a unidirectional orientation and the third layer (106) including at least one ply of a unidirectional tape (300); and
curing the first layer (102), the second layer (104), and the third layer (106) to form a ceramic matrix composite (100), wherein the ceramic matrix composite (100) provides about 15% to about 20% strength relative to a composite (100) comprising all unidirectional plies and the ceramic matrix composite (100) has a bending length of 3 cm to 25 cm based on a Shirley stiffness test.

12. The method of claim 11, wherein the first layer (102) includes 1 to 4 plies of unidirectional tape.

13. The method of claim 11 or 12, wherein the second layer (104) includes 1 to 20 composite plies.

14. The method of any of claims 11 to 13, wherein the at least one composite ply (400) has a thickness of about 127 microns (5mils) to about 381 microns (15 mils).

15. The method of any of claims 11 to 14, wherein the thin continuous matrix ply sheet (402) is selected from the group consisting of a silicon carbide powder.
